# EUROPÄISCHE PATENTSCHRIFT

(11) **EP 2 429 726 B1**
(45) Veröffentlichungstag und Bekanntmachung des Hinweises auf die Patenterteilung: **19.06.2013**
(21) Anmeldenummer: 10718874.0
(22) Anmeldetag: 21.04.2010
(51) Int. Cl.: B67D 7/78, B08B 3/04, C12C 3/00

(54) **VERROHRUNGSSYSTEM**
PIPING SYSTEM
SYSTÈME DE TUYAUTERIE

(30) Priorität: 12.05.2009 DE 102009020912
(43) Veröffentlichungstag der Anmeldung: 21.03.2012
(73) Patentinhaber: Krones AG, 93073 Neutraubling (DE)
(72) Erfinder: GRUBER, Robert, 84072 Abens/Gemeinde Au (DE); HERBERG, Hans-Jakob, 85368 Moosburg (DE); REUSS, Horst Hermann, 85774 Unterföhring (DE); PAINTNER, Hans, 93309 Kelheim (DE)
(74) Vertreter: Grünecker, Kinkeldey, Stockmair & Schwanhäusser
(86) Internationale Anmeldenummer: PCT/EP2010/002459
(87) Internationale Veröffentlichungsnummer: WO 2010/130331

(56) Entgegenhaltungen:
- EP-A1- 0 903 320
- US-A- 2 605 780

## Beschreibung

Die Erfindung betrifft ein Verrohrungssystem für eine Tankfarm, insbesondere für eine Brauerei, wie z.B. einen Gär- /Lagerkeller oder Hefekeller, sowie ein entsprechendes Betriebsverfahren.

Die Druckschrift US 2 605 780 A zeigt ein Verrohrungssystem für eine Tankfarm mit mehreren Tanks, die über eine Ringleitung in mehreren parallel zueinander angeordneten Tankgruppen zusammengefasst sind, einen Befüllblock mit einer Versorgungsleitung, der über ein entsprechendes Ventil mit einer Ringleitung zum Zuführen des Mediums verbindbar ist und einen Entleerblock mit einer Ableitung, die jeweils über ein entsprechendes Ventil mit einem jeweiligen Tank verbindbar ist.

Bei der Bierherstellung kommt die fertige Würze nach dem Sudhausprozess in den Gär- und Lagerkeller. Dabei lagert das Bier in sogenannten Gär- und Lagertanks. In vorteilhafterweise werden dabei zylindrokonische Gär- und Lagertanks verwendet. Die zylindrokonischen Gär- und Lagertanks sind zur Atmosphäre hin geschlossene/offene Behälter, in denen die Gärung oder die Reifung/Lagerung des Bieres erfolgt. Die zylindrokonischen Gär- und Lagertanks werden von unten befüllt und nach unten entleert. Die Befüllung von unten und Entleerung nach unten bedingt aber, dass die zylindrokonischen Gär- und Lagertanks mit mehreren Leitungen in Verbindung gebracht werden müssen, insbesondere mit einer Zuleitung der Würze, einer Ableitung für die Emtehefe, einer Ableitung für das Bier und eine Zu- und Ableitung für die einzelnen CIP-Flüssigkeiten. Dazu ist es wichtig, dass diese Verbindungen kontaminationsfrei und ohne Zutritt von Sauerstoff hergestellt werden.

Bei automatischen Anlagen wird die gesamte Anlage fest verrohrt und über ferngesteuerte Ventile gesteuert. Es ist bereits bekannt, mehrere Ventile in sogenannten Ventilknoten als Gruppenanschlüsse zusammenzufassen.

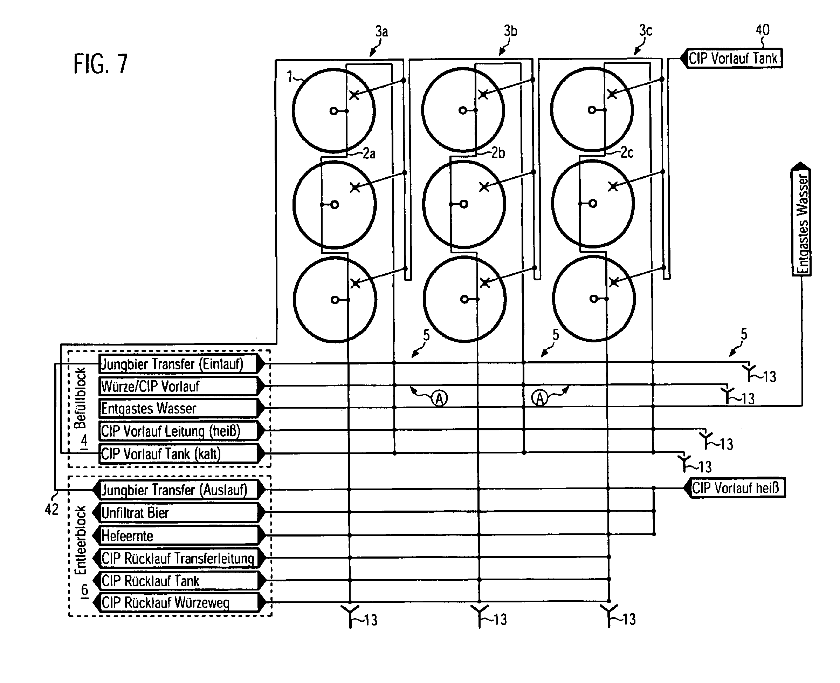

Dabei ergeben sich jedoch die Probleme, dass es insbesondere beim Wechseln der Medien zu großen Verschnittmengen durch Mischphasen kommt. Somit kommt es zu großen Verlusten an Produkt, Wasser und Reinigungs- und Desinfektionsmittel. Fig. 7 zeigt ein Verrohrungssystem mit mehreren Gär- und Lagertanks, die über Ringleitungen in mehrere Tankgruppenn 3a, b, c zusammengefasst sind. Hier weist jede Tankgruppe drei Tanks auf. Wenn nun beispielsweise der Tank 1 gefüllt werden soll, ergibt sich das Problem, dass es in den Zuführleitungen 5 zu einer Vermischung von Medium und Nachfolgemedium kommt, so dass eine große Menge aus den Leitungen ausgeschoben und in Kanal 13 verworfen werden muss. Insbesondere in dem Bereich A, d.h. hinter dem Tank 1, der befüllt werden soll, gibt es zudem keine Sicherheit, ob die Leitungen tatsächlich gereinigt sind oder nicht.

Hiervon ausgehend liegt der vorliegenden Erfindung die Aufgabe zugrunde, ein Verrohrungssystem für eine Tankanlage bereitzustellen, das eine optimale Medientrennung während der Leitungsausschübe gewährleistet und mit dem Verluste an Medien minimiert werden können.

Erfindungsgemäß wird diese Aufgabe durch die Merkmale des Anspruchs 1 und 8 gelöst.

Gemäß der vorliegenden Erfindung gibt es einen Befüllblock und einen Entleerblock, so dass es möglich ist, diese Ventilblöcke dezentral aufzustellen.

Erfindungsgemäß wird diese Aufgabe durch die Merkmale des Anspruchs 1 und 8 gelöst.

Gemäß der vorliegenden Erfindung gibt es einen Befüllblock und einen Entleerblock, so dass es möglich ist, diese Ventilblöcke dezentral aufzustellen.

Dadurch, dass das Ende mindestens einer Versorgungsleitung über eine entsprechende Bypassleitung mit mindestens einer Ableitung verbunden ist, ist eine optimale Medientrennung während der Leitungsausschübe gewährleistet. Verluste an Produkt, Wasser, Reinigungs- und Desinfektionsmittel können hierdurch minimiert werden. Durch die Bypassleitung(en) ergibt sich, dass keine Ausschübe in den Kanal am Ende der Befüllblöcke notwendig sind. Medien können somit in effektiver Weise auch wiederverwertet werden. Das Verrohrungssystem erlaubt das Führen der Medien z.B. der Reinigungsflüssigkeit von Befüllblock zu Entleerblock über den Bypass, so dass es möglich ist, dass z.B. nach der CIP-Tankreinigung sowohl die Tankgruppen sowie die zugehörigen Versorgungs- und Ableitungen so gereinigt werden können, dass sofort wieder mit der Produktion begonnen werden kann. Gleiches gilt ebenfalls für die Rohrleitungsreinigung z.B. für Würzeweg, Hefeernteleitung, Jungbierleitung und Bierunfiltratleitung. Das System umfasst mehrere Tanks, wobei es Systeme gibt, die jeweils nur einen Tank pro Ringleitung bzw. Tankgruppe aufweisen und Systeme, die mehrere Tanks pro Ringleitung bzw. Tankgruppe aufweisen.

Unter dem Ende der Versorgungsleitung ist das in Zuführrichtung des Mediums betrachtete Ende zu verstehen. Das erfindungsgemäße Konzept eignet sich nicht nur für den Gär-/ Lagerkelle und Hefekeller, sondern auch für Tankfarmen in anderen Lebensmittel erzeugenden oder pharmazeutischen Betrieben.

Wenn mehrere Befüllblöcke und Entleerblöcke mit entsprechenden Tankgruppenn hintereinander angeordnet sind, wobei die Versorgungsleitungen und Ableitungen der hintereinander angeordneten Befüll- und Entleerblöcke miteinander verbunden sind, ist mindestens eine Bypassleitung am Ende des letzten Befüll- und Entleerblocks angeordnet. Somit können auf einfache Art und Weise mehrere Blöcke zu einem System zusammengefasst werden, so dass das System beliebig erweiterbar ist.

Vorteilhafterweise umfasst eine Tankgruppe ein bis vier Tanks. Hierdurch wird es ermöglicht, dass nur die minimal notwendigen Rohrleitungsteilstücke für den jeweiligen Prozess (z.B Befüllen eines bestimmten Gärtanks mit Würze) zusammengeschaltet werden müssen. Medien wie Wasser oder Reinigungs- und Desinfektionsmittel, können eingespart bzw. Medienverluste wie z.B. Produkt, Wasser oder Reiniguns- und Desinfektionsmittel minimiert werden. Weiter können die Stromkosten durch geringere Rohrleitungswiderstände reduziert werden.

Der Befüllblock weist mindestens eine der folgenden Versorgungsleitungen auf: Jungbiertransferleitung, Würzeleitung, Leitung für entgastes Wasser, CIP-Vorlaufleitung zur Leitungsreinigung, CIP-Vorlaufleitung zur Tankreinigung und/oder der Entleerblock weist mindestens eine der folgenden Ableitungen auf:

Jungbiertransferleitung, Bierunfiltratableitung, Hefeernteableitung, CIP-Transferrücklaufleitung, CIP-Rücklaufleitung zur Tankreinigung, CIP-Würzewegrücklaufleitung.

Vorteilhafterweise ist am unteren Ende der Tanks jeweils ein Doppelsitzventil oder Bodensitzventil angeordnet.

Doppelsitzventile mit Leckageerkennung weisen eine große Sicherheit auf.

Die Ventile in den Versorgungs- und Ableitungen sind vorzugsweise Doppelsitzventile bzw. Dreiwegeklappenkombinationen. Ein Vorteil dieser Dreiwegekombination ist der minimale Druckverlust beim Durchströmen der Armatur, bei gleichzeitiger Leckageabsicherung zwischen Produkt und Reinigungsmittel. Somit kann die Summe der Rohrleitungswiderstände so gering wie möglich gehalten werden. Da z.B. diese Armatur auf der Saugseite der CIP-Rücklaufpumpe angebracht ist, kann eine Kavitation der CIP-Rücklaufpumpe vermieden werden.

Die Mehrwegventile sind z.B. Dreiwegeventile oder ähnliches und sind derart ausgebildet, dass in unangesteuertem Zustand (d.h. geschlossenem Zustand) der Weg in der mindestens einen Versorgungsableitung freigeschaltet ist und der Weg in die Ringleitung geschlossen ist und im angesteuerten Zustand der Weg in der Versorgungs- und Ableitung sowie der Weg in die Ringleitung geöffnet ist.

Bei einem Betriebsverfahren für das erfindungsgemäße Verrohrungssystem wird ein Medium (z.B. Produkt, Wasser, Reinigungs- und Desinfektionsflüssigkeit) über eine Versorgungsleitung des Befüllblocks und eine Bypassleitung direkt einer Ableitung des Entleerblocks zugeführt .

Vorteilhafterweise wird beim Einleiten einer Produkt-, Reinigungs- oder Spülflüssigkeit in eine bestimmte Versorgungsleitung zunächst das vorhandene Medium über die entsprechende Versorgungsleitung und den Bypass in die Ableitung geleitet. Hierbei bleibt der Weg in die Ringleitung über die entsprechenden Ventile gesperrt bis das Nachfolgemedium den Punkt P1 in der Ableitung erreicht hat. Ist dies erfolgt, wird an Punkt P2 die Ringleitung geöffnet, gleichzeitig der Bypass zwischen Befüll- und Entleerblock geschlossern. Jetzt fließt das Medium über die Ringleitung zur Ableitung.

Die vorliegende Erfindung wird nachfolgend unter Bezugnahme der folgenden Figuren näher erläutert.
- Fig.1: zeigt eine schematische Darstellung des erfindungsgemäßen Verrohrungssystems.
- Fig. 2: zeigt schematisch eine perspektivische Darstellung des Verrohrungssystems gemäß der vorliegenden Erfindung.
- Fig. 3a, b: zeigen das in Fig. 1 gezeigte Rohrsystem und ein Beispiel für den Produktlauf bei der CIP-Reinigung.
- Fig. 4: zeigt das in Fig. 1 gezeigte Verrohrungssystem und einen Produktweg, wie er beispielsweise bei der Hefeernte gewählt wird.
- Fig. 5: zeigt ein erweitertes Verrohrungssystem.
- Fig. 6: zeigt eine Kombination von mehreren Befüll- und Entleerblöcken.
- Fig. 7: zeigt ein Verrohrungssystem ohne Bypass.

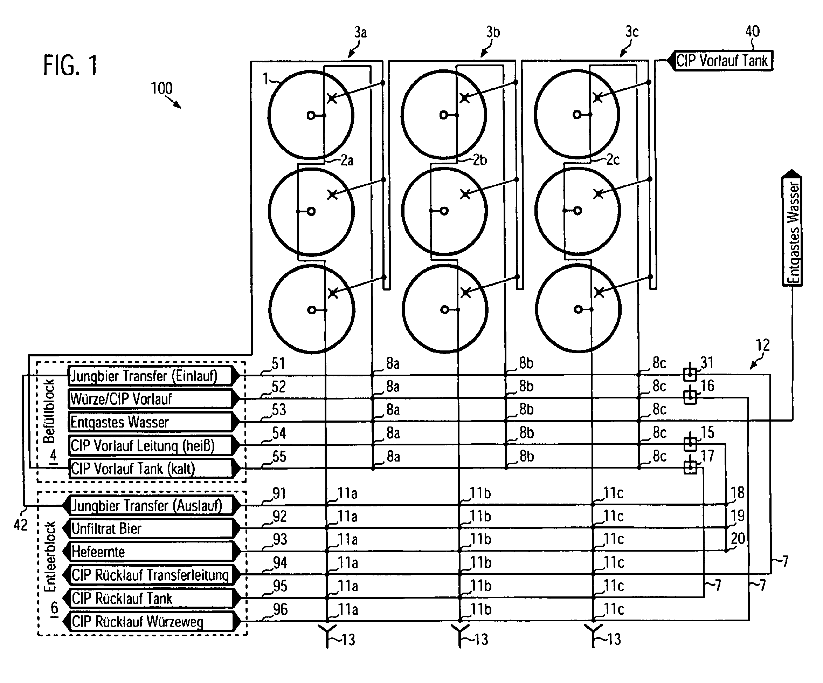

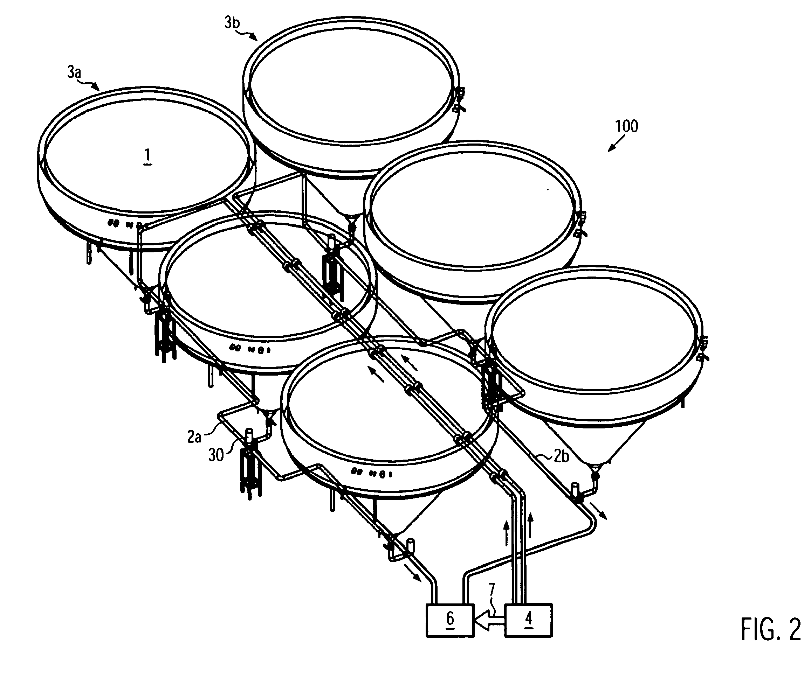

Fig. 1 zeigt grobschematisch ein Verrohrungssystem 100 für einen Gär- und Lagerkeller mit mehreren Gär- und Lagertanks 1, die in einer sogenannten Tankfarm zusammengefasst sind. Bei den Gär- und Lagertanks 1 handelt es sich vorteilhafterweise um zylindrokonische Gär- und Lagertanks, die zur Atmosphäre hin geschlossene/offene Behälter sind und in denen die Gärung und/oder die Reifung/Lagerung des Bieres erfolgt. Die Gär- und Lagertanks werden immer von unten gefüllt und nach unten entleert, wie insbesondere aus Fig. 2 hervorgeht. Dazu ist beispielsweise ein Doppelsitzventil 30 vorgesehen. Die Doppelsitzventile haben vorzugsweise eine Leckageerkennung und die produktführenden Ventile besitzen vorzugsweise eine Ventilsitzanlüftung und/oder eine Leckageraumspülung. Alle Ventile werden z.B. gemäß den EHEDG/HACCP-Richtlinien gefertigt und hygienegerecht installiert.

Die Gär- und Lagertanks 1 sind über Ringleitungen 2a, b, c in mehrere n parallel zueinander angeordnete Tankgruppenn 3a, b, c;n zusammengefasst Durch das Zusammenschalten von ein bis vier Tanks 1 in einer Tankgruppe wird ermöglicht, nur die minimal notwendigen Rohrleitungsstücke zusammenzuschalten. Einsparung von Medien (Produkt, Wasser, Reinigungsmittel) bzw. Minimierung von Medienverlusten sowie Reduzierung der Stromkosten durch geringere Rohrleitungswiderstände resultieren aus dieser Anordnung. Weiter umfasst das Verrohrungssystem 100, wie aus Fig. 1 hervorgeht, einen Befüllblock 4, der mindestens eine Versorgungsleitung 51 - 55 ausweist, die jeweils über ein entsprechendes Ventil 8a, b, c mit der entsprechenden Ringleitung (2a, b, c) verbindbar ist, zum Zuführen eines Mediums. In diesem Fall weist der Befüllblock folgende Versorgungsleitungen auf: Jungbiertransferleitung 51, Würzeleitung 52, in der auch CIP-Flüssigkeiten vom Sudhaus zulaufen können, eine Leitung für entgastes Wasser 53, eine CIP-Vorlaufleitung zur Leitungsreinigung (Heiß) 54 und eine CIP-Vorlaufleitung zur Tankreinigung (Kalt) 55.

Das System weist weiter einen Entleerblock 6 mit mindestens einer Ableitung 91 - 96 auf, die jeweils über ein entsprechendes Ventil 11a, b, c mit der entsprechenden Ringleitung 2a, b, c verbindbar ist.

Der Entleerblock umfasst hier eine Jungbiertransferleitung 91, eine Bierunfiltratableitung 92, eine Hefeernteableitung 93, eine CIP-Transferrücklaufleitung 94, eine CIP-Rücklaufleitung zur Tankreinigung 95 und eine CIP-Würzewegrücklaufleitung 96.

Die Ventile 8a, b, c sowie 11a, b, c in den Versorgungs- und Ableitungen sind vorzugsweise Doppelsitzventile bzw. eine Dreiwegeventilkombination, Der Einsatz dieser Ventile bzw. Ventilkombinationen bringt den Vorteil eines minimalen Druckverlustes beim Durchströmen der Armatur mit sich. Somit kann die Summe der Rohrleitungswiderstände so gering wie möglich gehalten werden.

Die Ventile 8a,b,c sowie 11a,b,c sind derart ausgebildet, dass in unangesteuertem (geschlossenen) Zustand der Weg in der mindestens einen Versorgungs- bzw. Ableitung freigeschaltet ist und der Weg in die Ringleitung 2a, b, c geschlossen ist und im angesteuerten Zustand (offen) der Weg in der Versorgungs- und Ableitung sowie der Weg in die Ringleitung geöffnet ist.

Das Ende mindestens einer Versorgungsleitung 51 - 55 ist über eine zugehörige Bypassleitung 7 mit mindestens einer Ableitung 91 - 96 verbunden. So ist in diesem Ausführungsbeispiel das Ende der Jungbiertransferleitung über den Bypass 7 mit der CIP-Transferrücklaufleitung 94 des Entleerblocks 6 verbunden. Die Würzeleitung 52 ist über den Bypass 7 mit der CIP-Würzewegrücklaufleitung 96 verbunden. Die CIP-Vorlaufleitung zur Leitungsreinigung (Heiß) 54 ist mit dem Bypass 7 wahlweise mit der Jungbiertransferleitung 91, der Bierunfiltratableitung 92 oder der Hefeernteableitung 93 verbindbar. Dazu ist vorzugsweise je eine Dreiwegeventilkombination 18, 19, 20 in der Bypassleitung 7 vorgesehen, um einen entsprechenden Bypassweg freizuschalten. In den zuvor genannten Bypassleitungen 7 sind ebenfalls Absperrventile15, 16, 17 und 31 vorgesehen, um einen Bypass zu öffnen oder zu schließen. Die Leitung für entgastes Wasser 53 weist hier keinen Bypass auf.

Weiter weist hier das Verrohrungssystem 100 einen CIP-Vorlauf 40 auf, über den vorzugsweise über Sprühköpfe bzw. Zielstrahlreiniger oder dergeleichen den einzelnen Tanks 1 Reinigungsflüssigkeit zuführbar ist. Diese Leitung führt in den Befüllblock 4 in die Leitung 55. von wo aus sie über den Bypass 7 zwischen Befüll- und Entleerrblock zum Reinigungsrücklauf der Tankreinigung 95 gelangt. Über diese Schaltung der Rohrleitungen wird ein Rückwärtsspülen der Tankausläufe während der Tankreinigung ermöglicht, hierzu wird die Ringleitung 2a, b, c in Intervallen geöffnet.

Am Ende einer jeden Ringleitung 2a, b, c besteht die Möglichkeit, einer Restentleerung des Tanks in einen Kanal 13 .Dazu sind die Ventile in der letzten Ableitung als Dreiwegekombination derart ausgebildet, dass darüber die Restentleerung in den Kanal möglich ist. Hier handelt es lediglich um eine Restentleerung (geringe Mengen, z.B. Haftwasser) des Tanks, nicht um einen Rohrleitungsausschub. Diese Restentleerung kann vorzugsweise für jeden Tank einzeln, unabhängig von anderen Rohrleitung erfolgen.Wahlweise kann die Tankanlage mit zusätzlichen Wegeabsperrungen nach jedem einzelnen Tank ausgerüstet werden (nicht dargestellt).

Grundsätzlich sind jedoch immer nach jeder Tankgruppe Absperrungen vorgesehen.

Zusätzliche Wegeabsperrungen minimieren Produktvermischungen und daraus resultierendie Verluste nochmals.

Fig. 2 zeigt zum leichteren Verständnis ein Verrohrungssystem 100, das im Wesentlichen dem in Fig. 1 gezeigten Verrohrungssystem entspricht, wobei hier jedoch nur zwei Tankgruppen pro Befülll- bzw. Entleerblock 4, 6 ersichtlich sind. In dem Befüllblock 4 befinden sich die Versorgungsleitungen 51 - 55 sowie die Ventile 8a, b. In dem Entleerblock 6 befinden sich die Ableitungen 91 - 96 sowie die Ventile 11 a, b.

Wie grob schematisch in Fig. 2 gezeigt ist, ist ein Bypass 7 zwischen Befüllblock und Entleerblock, d.h. mindestens eine Bypassleitung, insbesondere aber die in Fig. 1 gezeigten vier Bypassleitungen, vorgesehen. Über das Schalten der entsprechenden Ventile 8a, b, 11a, b können Verbindungen zu den gewünschten Tankgruppen 3a, b erzeugt werden und auch ausgewählte Tanks 1 über die Ringleitungen 2a, b befüllt und entleert werden, wobei dann die entsprechenden Ventile 30, hier die Doppelsitzventile 30, für den entsprechenden ausgewählten Tank 1 geöffnet werden. Die Ventile werden automatisch über eine nicht näher dargestellte Steuereinrichtung entsprechend dem Prozess angesteuert. Der Befüll- und Entleerblock weist eine kleine Abmessung auf und kann so geschickt und platzsparend dezentral angeordnet werden.

In Fig. 2 wurde der Einfachheit halber auf die entsprechenden Zuleitungen für die Versorgungsleitungen des Befüllblocks und die entsprechenden Ableitungen des Entleerblocks verzichtet.

Grundsätzlich werden nur die für die Produktion oder Reinigung notwendigen Leitungen in den aktuellen Produktions- oder Reinigungsprozess eingebunden. Durch diese Grundidee werden vergleichsweise kurze Rohrleitungswege und somit niedrige Druckverluste auf der Pumpendruck und Saugseite erzeugt. Hierdurch werden Energie- und Medienverbräuche auf ein Minimum reduziert.

Durch die Bypassleitung bzw. Bypassleitungen 7 müssen beispielsweise beim Medienwechsel die Inhalte der Versorgungsleitungen 51, 52, 54 und 55, die hinter der Tankgruppe 3a, b, c liegen, in der z.B. gerade ein Tank 1 befüllt, entleert oder gereinigt wird, nicht wie im Stand der Technik über den Kanal 13 verworfen werden, sondern die durch das Nachfolgemedium ausgeschobene Menge kann über dem Bypass 7 kontrolliert in eine entsprechende Ableitung 91 - 96 geschoben und weiter verwendet werden. Es kommt zu keiner unkontrollierten Vermischung von unterschiedlichen Medien. Auch die Ableitungen 91 - 96 können über ihre gesamte Strecke gut gereinigt werden. Nach z.B dem Prozessschritt Tankbefüllung werden die verwendeten Ringleitungen 2a,b,c der jeweiligen Tankgruppen 3 vorzugsweise mit der zugehörigen Versorgungsleitung und Ableitung über die Bypässe 7 gereinigt, so dass im Anschluss sofort wieder mit der Produktion begonnen werden kann. Die Reinigung der Versorgungs- und Ableitungen sowie der Ringleitungen über die Bypässe 7 hat den Vorteil, dass das gesamte Verrohrungssystem in einem hygienisch einwandfreien Zustand ist. Somit kann z.B. nach der Verwendung der Tankschlaufe 3a und deren anschließenden Reinigung über den Bypass 7 umgehend ein Tank der Tankschlaufe 3c befüllt werden, ohne dass dann vor dieser Befüllung die Ringleitung 2c und die Versorgungsleitung gereinigt werden muss, dies spart neben Zeit auch Wasser sowie Reinigungs- und Desinfektionsmittel.

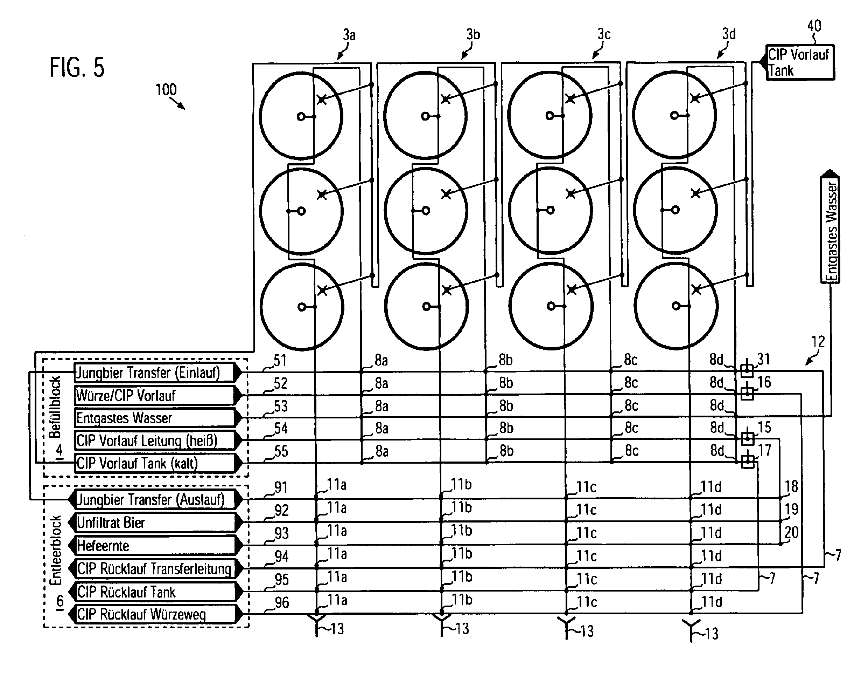

Wie insbesondere aus Fig. 5 hervorgeht, können die entsprechenden Blöcke auf einfache Art und Weise erweitert werden, indem einfach eine weitere Tankgruppe 3d oder mehrere weitere Tankgruppen hinzugefügt werden.

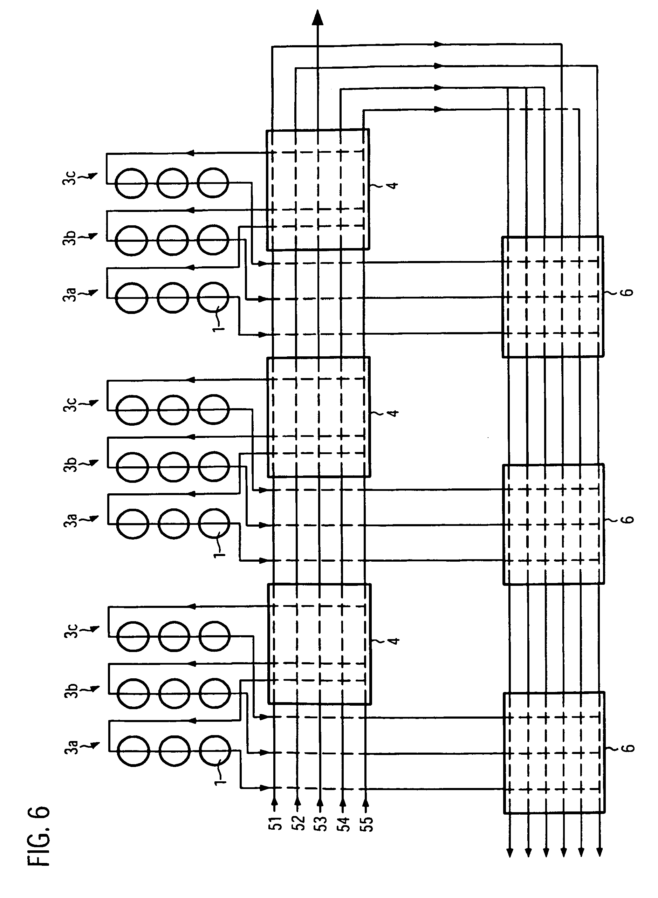

In den Fig. 1 und 2 ist ein Befüll- und Entleerblock 4, 6 gezeigt. Wie grob schematisch in der Fig. 6 dargestellt ist, ist es auch möglich, dass mehrere Befüllblöcke 4 und Entleerblöcke 6 mit entsprechenden Tankgruppen 3a, b, c hintereinander angeordnet sind, wobei die Versorgungsleitungen 51 - 55 und Ableitungen 91 - 96 der hintereinander angeordneten Befüll- und Entleerblöcke 4, 6 jeweils miteinander verbunden sind. Dabei ist wichtig, dass dann die Bypassleitung bzw. die Bypassleitungen 7 am Ende des letzten Befüll- und Entleerblocks angeordnet sind (in Füllrichtung betrachtet). Somit kann die Anzahl der Befüll- und Entleerblöcke in Abhängigkeit der Größe und Bauweise des Gär- und Lagerkellers angepasst werden. So können die entsprechenden Blöcke übersichtlich im Kellerbereich angeordnet werden. Durch den einfachen Aufbau ist eine gute Zugänglichkeit für Pflege und Wartung möglich.

Nachfolgend wird ein Beispiel für das erfindungsgemäße Verfahren näher erläutert:

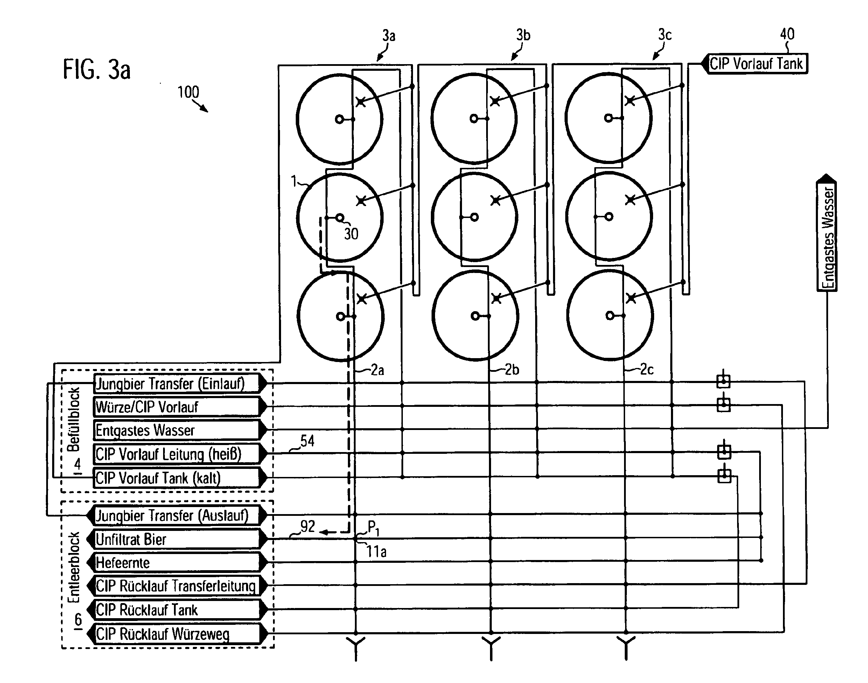

Fig. 3a zeigt schematisch den Entleerweg eines Tanks 1, der sich hier in der Tankgruppe 3a in der mittleren Position befindet. Durch Öffnen des Ventils 30 kann das Medium in Tank 1 über die Leitung 2a in die Bierunfiltratableitung 92 geleitet werden. Dabei ist auch das Ventil 11a am Punkt P1 geöffnet, so dass das Medium ablaufen kann.

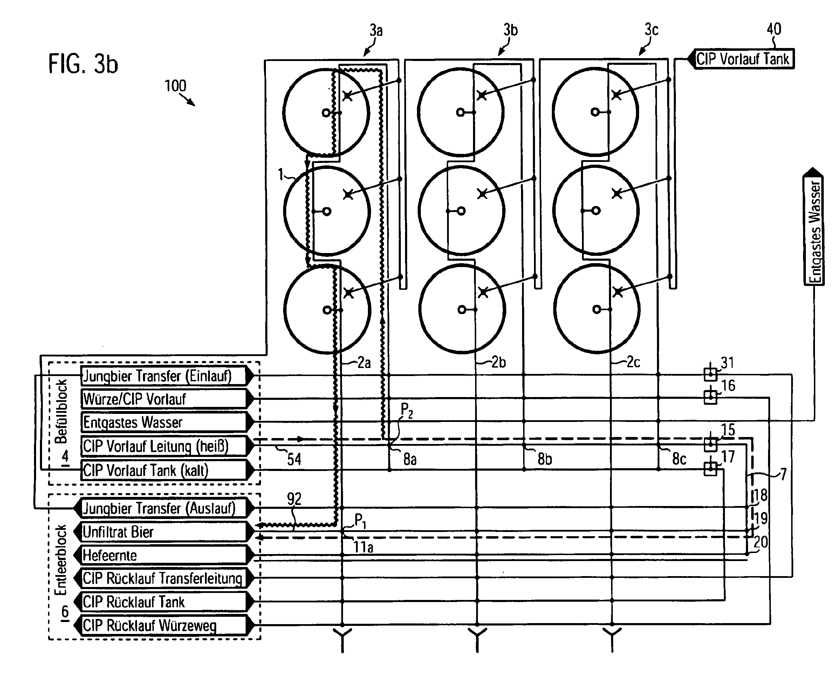

In Fig. 3b wird beispielsweise eine CIP-Reinigung der Leitungen nach dem Entleeren eines Tanks 1, der sich hier in der Tankgruppe 3a in der mittleren Position befindet gezeigt. Hier erfolgt das Einleiten von Reinigungsflüssigkeit über die CIP-Vorlaufleitung zur Leitungsreinigung 54 entlang dem gestrichelten Pfeil über die gesamte Leitung 54 bis zum Ende der Versorgungsleitung 54 (bei mehreren Blöcken bis zum Ende der Versorgungsleitung des letzten Blocks). Die Reinigungsflüssigkeit wird über den Bypass 7 bei geöffneten Ventilen 15 und 19 über die Bierunfiltratableitung 92 abgeleitet. Dabei sind die Ventile 8a, b, c in der Leitung 54 geschlossen, so dass keine Flüssigkeit in die entsprechenden Ringleitungen 2a, b, c gelangt. Sobald die Reinigungsflüssigkeit das Vormedium bis zu einem Punkt P1 ausgeschoben hat, wobei der Punkt P1 einem Punkt entspricht, an dem die Ableitung 92 auf die Ringleitung, die zu dem Tank bzw. der Tankgruppe, die gereinigt werden soll, gehört, erreicht, kann das entsprechende Ventil 8a am Punkt P2 in der Versorgungsleitung geöffnet werden, so dass das Medium in die Ringleitung 2a geschoben wird und über die Ringleitung wieder zurück zum Punkt P1 und über die Leitung 92 abgeführt werden kann. Gleichzeitig wirddas Ventil 15 geschlossen, so dass das Medium nicht weiter über den Bypass 7 transportiert wird. Das Medium läuft jetzt also über die Ringleitung 2a hin zur Ableitung 92.(Ventil 11a geöffnet; so dass Medium ablaufen kann). Somit ist eine mediensparende einwandfreie Reinigung der Leitungen möglich. Wann das Medium den Punkt P1 erreicht, kann z.B. über eine Mengenerfassung mittels einer Durchflussmessung oder einen Leitfähigkeitsmesser bestimmt werden.

Das Zirkulieren der Reinigungsflüssigkeit kann durch Schalten der Ventile 15 und 8a zwischen der Ringleitung 2a (gezackter Weg) und dem Bypass 7 (gestrichelter Weg) abwechselnd taktweise geführt werden. Wenn eine ausreichende Menge an Reinigungsflüssigkeit (entsprechend den üblichen Reinigungsschritten) durch die entsprechenden Leitungen geflossen ist, kann der Zulauf der Reinigungsflüssigkeit gestoppt werden und die Reinigungsmedien werden durch ein Nachfolgemedium (z.B. weiteres Reinigungsmedium, Desinfektionsmittel oder Wasser) nach dem gleichen Verfahren wie oben beschrieben ausgeschoben.

Die Leitungen sind dann ausreichend sauber für beispielsweise den nächsten Füllvorgang des Tanks 1 und insbesondere auch für Tanks in anderen Gruppen.

Wie aus den zuvor gezeigten Ausführungsformen deutlich wurde, ermöglichen die Befüll- und Entleerblöcke mit den entsprechenden Tankgruppen sowie der Bypassschaltung eine Vielzahl von Schaltmöglichkeiten der Rohrstücke um so Produktverluste zu minimieren und Wasser, Reinigungs- und Desinfektionsmittel zu sparen und eine ausreichende Reinigung zu ermöglichen.

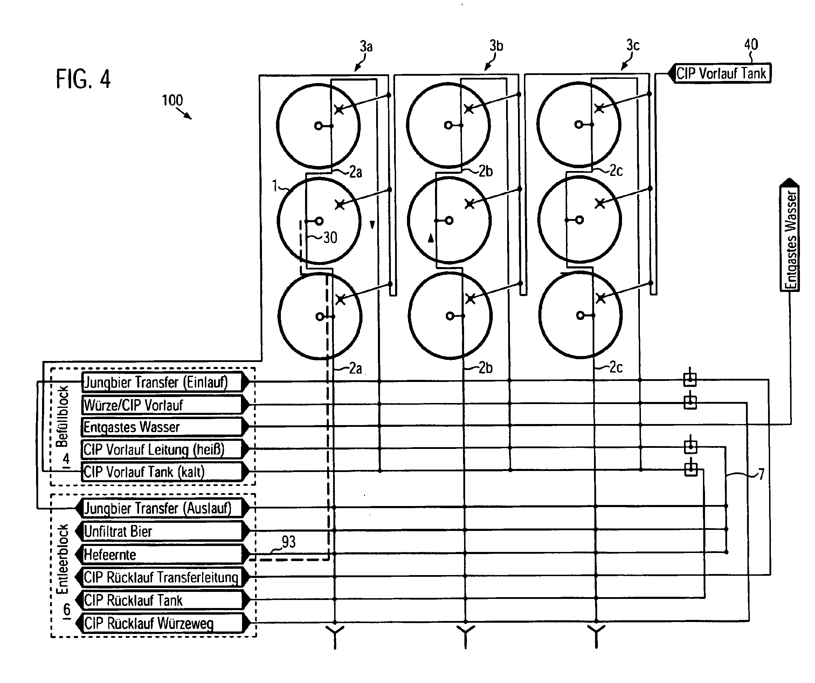

Fig. 4 zeigt den Weg der Hefeernte, wobei hier die Hefe über das geöffnete Doppelsitzventil 30 an dem zu entleerenden Tank 1 und der entsprechenden Tankgruppe 3a an die Hefeernteleitung 93 über die Ringleitung 2a und das entsprechende geöffnete Ventil 11a angebunden wird Die Hefeernte erfolgt dabei vorzugsweise über eine nicht dargestellte Schlauchpumpe. Schlauchpumpen sind besonders für das Fördern von hochviskosen Produkten, wie z.B. Hefe, geeignet. Somit ist es möglich, die minimal notwendige Rohrleitungslänge zusammenzuschalten.

Das erfindungsgemäße Verrohrungssystem ermöglicht durch die Bypässe an den Ventilblöcken eine optimale Medientrennung während der Leitungsausschübe. Verluste an Produkt, Wasser und Reinigungsmitteln können minimiert werden. Ausgeschobene Medien können über die entsprechenden Ableitungen 91 - 96 z.B. der Produktion zur Wiederverwendung zugeführt werden.

Es ist möglich diese Ausschübe entsprechend ihrer Temperatur in den vorhanden Produktions-, Reinigungsmittel-, oder Wassertanks aufzufangen. Wahlweise können diese zur Produktion oder Reinigung wiederverwendet werden.

Die in den Ausführungsbeispielen gezeigten Dreiwegeventile können auch durch Mehrwegventile ersetzt werden. Die Anzahl der Zuleitungen im Befüllblock muss nicht identisch zur Anzahl der Ableitungen im Entleerblock sein.

Das obgenannte Beispiel einer Tankanlage zum Betreiben von Gär- und Lagertanks wurde nur beispielhaft, zur einfachen Verdeutlichung einer solchen Tankanlage verwendet. In der Brauerei gibt es weitere Tanks, die zu einer Tankanlage verbunden werden, dies können zum Beispiel Hefetanks, Althefetanks, Drucktanks, Ausmischtanks, Dosagetanks, CIP-Tanks (Cleaning In Place) und/oder weitere Tanks die zu einer Tankanlage zusammen gefasst werden. Darüber hinaus eignet sich die Erfindung auch für die gesamte Nahrungsmittelindustrie, welche auch die Getränkeherstellung beinhaltet. Denkbar ist auch die Verwendung in der Pharmaindustrie.

## Patentansprüche

1. Verrohrungssystem (100) für eine Tankfarm, insbesondere für eine Brauerei, mit
- mehreren Tanks (1), die über Ringleitungen (2a, b, c) in mehreren parallel zueinander angeordneten Tankgruppen (3a, b, c) zusammengefasst sind,
- einem Befüllblock (4), der mindestens eine Versorgungsleitung (51 - 55) aufweist, die jeweils über ein entsprechendes Ventil (8a, b, c) mit der entsprechenden Ringleitung (2a, b, c) zum Zuführen eines Mediums verbindbar ist,
- einem Entleerblock (6) mit mindestens einer Ableitung (91-96), die jeweils über ein entsprechendes Ventil (11a, b, c) mit der Ringleitung (2a, b, c) verbindbar ist,
**dadurch gekennzeichnet, dass** das Ende mindestens einer Versorgungsleitung (51 - 55) über eine zugehörige Bypassleitung (7) mit mindestens einer Ableitung (91 - 96) verbunden ist.

2. Verrohrungssystem (100) nach Anspruch 1, **dadurch gekennzeichnet, dass** mehrere Befüllblöcke (4) und Entleerblöcke (6) mit entsprechenden Tankgruppen (3a, b, c) hintereinander angeordnet sind, wobei die Versorgungsleitungen und die Ableitungen der hintereinander angeordneten Befüll- und Entleerblöcke (4, 5) miteinander verbunden sind und wobei die mindestens eine Bypassleitung (7) am Ende des letzten Befüll- und Entleerblocks angeordnet ist.

3. Verrohrungssystem (100) nach mindestens Anspruch 1 oder 2, **dadurch gekennzeichnet, dass** eine Tankgruppe (3a, b, c) ein bis vier Tanks (1) umfasst.

4. Verrohrungssystem (100) nach mindestens einem der Ansprüche 1 bis 3, **dadurch gekennzeichnet, dass** der Befüllblock (4) mindestens eine der folgenden Versorgungsleitungen umfasst: Jungbiertransferleitung (51), Würzeleitung (52), Leitung für entgastes Wasser (53), CIP-Vorlaufleitung zur Leitungsreinigung (54), CIP-Vorlaufleitung zur Tankreinigung (55) und/oder
der Entleerblock (6) mindestens eine der folgenden Ableitungen (91 - 96) umfasst: Jungbiertransferleitung (91), Bierunfiltratableitung (92), Hefeernteableitung (93), CIP-Transferrücklaufleitung (94), CIP-Rücklaufleitung zur Tankreinigung (95), CIP-Würzewegrücklaufleitung (96).

5. Verrohrungssystem nach mindestens einem der Ansprüche 1 bis 4, **dadurch gekennzeichnet, dass** am unteren Ende der Tanks (1) jeweils ein Doppelsitzventil (30) oder Bodensitzventil oder ein Ventil, welches befähigt ist einen Tank zu schließen, angeordnet ist.

6. Verrohrungssystem (100) nach mindestens einem der Ansprüche 1 bis 5, **dadurch gekennzeichnet, dass** die Ventile (8a, b, c, 11a, b, c) in den Versorgungs- und Ableitungen (51 - 55, 91 - 96) Mehrwegventile, insbesondere Dreiwegeventile sind und insbesondere eine Dreiwege-Klappenkombination oder Mehrwege-Doppelsitzventile.

7. Verrohrungssystem (100) nach Anspruch 6, **dadurch gekennzeichnet, dass** die Mehrweg- bzw. Dreiwegeventile derart ausgebildet sind, dass in unangesteuertem Zustand der Weg in der mindestens einen Versorgungs- und Ableitung freigeschaltet ist und der Weg in die Ringleitung (2a, b, c) geschlossen ist und in angesteuertem Zustand der Weg in der Versorgungs- und Ableitung sowie der Weg in die Ringleitung (2a, b, c) geöffnet ist.

8. Betriebsverfahren für ein Verrohrungssystem (100) für einen Gär- und Lagerkeller nach mindestens einem der Ansprüche 1 bis 7, wobei ein Medium über eine Versorgungsleitung (51 - 55) des Befüllblocks (4) über eine Bypassleitung (7) direkt einer Ableitung (91 - 96) des Entleerblocks (6) zugeführt wird.

9. Betriebsverfahren nach Anspruch 8, **dadurch gekennzeichnet, dass** beim Zuleiten eines Mediums zu einem bestimmten Tank (1) bzw. einer bestimmten Tankgruppe zunächst das Medium über die entsprechende Versorgungsleitung (51 - 55) über den Bypass (7) in die Ableitung (91 - 96) geleitet wird, wobei der Weg in die Ringleitungen (2a, b, c) über die entsprechenden Ventile (8a, b, c) gesperrt ist, wobei
wenn das Medium den Punkt (P1) in der Ableitung (91 - 96) erreicht hat, an dem die Ableitung (91 - 96) auf die Ringleitung (2a, b, c), die zu dem Tank (1) gehört trifft, das entsprechende Ventil (8a, b, c, P2) in der Versorgungsleitung (51 - 55) geöffnet wird, so dass das Medium in die Ringleitung (2a, b, c) austreten kann.

## Claims

1. Piping system (100) for a tank farm, in particular for a brewery with
- a plurality of tanks (1), which are combined via ring lines (2a, b, c) into a plurality of tank groups (3a, b, c) arranged parallel to each other,
- a filling block (4), which has at least one supply line (51 - 55), which in each case can be connected to the corresponding ring line (2a, b, c) via a corresponding valve (8a, b, c) for feeding a medium,
- a drain block (6) with at least one drain line (91 - 96) which in each case can be connected to the ring line (2a, b, c) via a corresponding valve (11a, b, c),
**characterised in that** the end of at least one supply line (51 - 55) is connected to at least one drain line (91 - 96) via an associated bypass line (7).

2. Piping system (100) according to Claim 1, **characterised in that** a plurality of filling blocks (4) and drain blocks (6) are arranged with corresponding tank groups (3a, b, c) one behind the other, wherein the supply lines and the drain lines of the filling and drain blocks (4, 5), arranged one behind the other, are connected together and wherein the at least one bypass line (7) is arranged at the end of the last filling and drain block.

3. Piping system (100) according to at least Claim 1 or 2, **characterised in that** a tank group (3a, b, c) comprises one to four tanks (1).

4. Piping system (100) according to at least one of the Claims 1 to 3, **characterised in that** the filling block (4) comprises at least one of the following supply lines:
green beer transfer line (51), wort line (52), line for degassed water (53), CIP feed line for pipe cleaning (54), CIP feed line for tank cleaning (55) and/or
the drain block (6) comprises at least one of the following drain lines (91 - 96): green beer transfer line (91), unfiltered beer drain line (92), yeast recovery drain line (93), CIP transfer return line (94), CIP return line for tank cleaning (95), CIP wort path return line (96).

5. Method according to at least one of the Claims 1 to 4, **characterised in that** a double seat valve (30) or bottom seat valve or a valve, which is capable of shutting off a tank, is arranged at the lower end of the tank (1) in each case.

6. Piping system (100) according to at least one of the Claims 1 to 5, **characterised in that** the valves (8a, b, c, 11a, b, c) in the supply and drain lines (51 - 55, 91 - 96) are multiple-way valves, in particular three-way valves and in particular a three-way flap combination or multiple-way double seat valves.

7. Piping system (100) according to Claim 6, **characterised in that** the multiple-way or three-way valves are formed such that in the de-energised state the path in the at least one supply and drain line is open and the path into the ring line (2a, b, c) is closed and in the energised state the path in the supply and drain lines as well as the path into the ring line (2a, b, c) are open.

8. Operating method for a piping system (100) for a fermentation and storage cellar according to at least one of the Claims 1 to 7, wherein a medium is fed via a supply line (51 - 55) of the filling block (4) via a bypass line (7) directly to a drain line (91 - 96) of the drain block (6).

9. Operating method according to Claim 8, **characterised in that** on passing a medium to a certain tank (1) or a certain tank group the medium is first passed via the corresponding supply line (51 - 55) via the bypass (7) into the drain line (91 - 96), wherein the path into the ring lines (2a, b, c) via the corresponding valves (8a, b, c) is blocked, wherein
when the medium has reached the point (P1) in the drain line (91 - 96) at which the drain line (91 - 96) meets the ring line (2a, b, c), which belongs to the tank (1), the corresponding valve (8a, b, c, P2) in the supply line (51 - 55) is opened so that the medium can exit into the ring line (2a, b, c).

## Revendications

1. Système de tuyauterie (100) pour un parc de réservoirs, en particulier pour une brasserie, comprenant
- plusieurs réservoirs (1) qui sont regroupés via des conduites en boucle (2a, b, c) en plusieurs groupes de réservoirs (3a, b, c) agencés parallèlement entre eux,
- un bloc de remplissage (4) comportant au moins une conduite d'alimentation (51-55) qui est respectivement connectable à la conduite en boucle correspondante (2a, b, c) via une vanne correspondante (8a, b, c) pour transporter un fluide,
- un bloc de vidange (6) avec au moins une conduite de décharge (91-96) qui est respectivement connectable à la conduite en boucle (2a, b, c) via une vanne correspondante (11a, b, c),
**caractérisé en ce que** l'extrémité d'au moins une conduite d'alimentation (51-55) est connectée à au moins une conduite de décharge (91-96) via une conduite de dérivation associée (7).

2. Système de tuyauterie (100) selon la revendication 1, **caractérisé en ce que** plusieurs blocs de remplissage (4) et de vidange (6) sont agencés l'un derrière l'autre avec des groupes de réservoirs (3a, b, c) correspondants, dans lequel les conduites d'alimentation et les conduites de décharge des blocs de remplissage et de vidange (4, 5) agencés l'un derrière l'autre sont reliés entre eux, et dans lequel l'au moins une conduite de dérivation (7) est agencée à l'extrémité du dernier des blocs de remplissage et de vidange.

3. Système de tuyauterie (100) selon au moins la revendication 1 ou 2, **caractérisé en ce qu'**un groupe de réservoirs (3a, b, c) comporte de un à quatre réservoirs (1).

4. Système de tuyauterie (100) selon au moins l'une des revendications 1 à 3, **caractérisé**
**en ce que** le bloc de remplissage (4) comporte au moins une des conduites d'alimentation suivantes :
conduite de transfert de bière jeune (51), conduite de moût (52), conduite d'eau dégazée (53), conduite de tête de nettoyage en place CIP, soit Clean In Place, pour le nettoyage des conduites (54), conduite de tête CIP pour le nettoyage des réservoirs (55), et/ou
**en ce que** le bloc de vidange (6) comporte au moins une des conduites de décharge suivantes (91-96) : conduite de transfert de bière jeune (91), conduite de décharge de bière à filtrer (92), conduite de décharge de levure collectée (93), conduite de retour de transfert CIP (94), conduite de retour CIP pour le nettoyage des réservoirs (95), conduite de retour de traitement du moût CIP (96).

5. Système de tuyauterie selon au moins l'une des revendications 1 à 4, **caractérisé en ce qu'**une vanne à double siège (30), une vanne à siège de fond ou une vanne capable d'isoler un réservoir est agencée à l'extrémité inférieure du réservoir (1).

6. Système de tuyauterie (100) selon au moins l'une des revendications 1 à 5, **caractérisé en ce que** les vannes (8a, b, c, 11a, b, c) sur les conduites d'alimentation et de décharge (51-55, 91-96) sont des vannes multivoies, en particulier des vannes trois voies, et en particulier une combinaison de vanne à trois voies ou une vanne à double siège multivoies.

7. Système de tuyauterie (100) selon la revendication 6, **caractérisé en ce que** les vannes multivoies ou trois voies sont construites de telle façon qu'à l'état non commandé, le passage est libre dans l'au moins une conduite d'alimentation et de décharge et le passage est fermé dans la conduite en boucle (2a, b, c), et à l'état commandé, le passage dans la conduite d'alimentation et de décharge ainsi que le passage dans la conduite en boucle (2a, b, c) sont ouverts.

8. Procédé d'exploitation d'un système de tuyauterie (100) pour une cave de fermentation et de garde selon au moins l'une des revendications 1 à 7, dans lequel un fluide passant dans une conduite d'alimentation (51-55) du bloc de remplissage (4) est envoyé directement via une conduite de dérivation (7) dans une conduite de décharge (91-96) du bloc de vidange (6).

9. Procédé d'exploitation selon la revendication 8, **caractérisé en ce que**, lors du transfert d'un fluide vers un réservoir déterminé (1) ou un groupe de réservoirs déterminé, le fluide est d'abord conduit dans la conduite d'alimentation correspondante (51-55) via la dérivation (7) dans la conduite de décharge (91-96), dans lequel le passage via la vanne correspondante (8a, b, c) est fermé dans la conduite en boucle (2a, b, c), et dans lequel
lorsque le fluide a atteint le point (P1) dans la conduite de décharge (91-96) auquel la conduite de décharge (91-96) parvient à la conduite en boucle (2a, b, c) qui correspond au réservoir (1), la vanne correspondante (8a, b, c, P2) est ouverte dans la conduite d'alimentation (51-55), de telle manière que le fluide peut sortir de la conduite en boucle (2a, b, c).
